# EUROPEAN PATENT APPLICATION

(11) **EP 4 317 101 A1**
(43) Date of publication of application: **07.02.2024**
(21) Application number: 22780288.1
(22) Date of filing: 22.03.2022
(51) Int. Cl.: C03C 27/06, E06B 3/663

(54) **DOUBLE-PANE GLASS PANEL**

(30) Priority: 29.03.2021 JP 2021056150
(71) Applicant: Nippon Sheet Glass Company, Limited, Minato-ku Tokyo 108-6321 (JP)
(72) Inventor: MINAAI, TETSUO, Tokyo 108-6321 (JP)
(74) Representative: HGF
(86) International application number: PCT/JP2022/013036
(87) International publication number: WO 2022/210073

(57) **Abstract**

A multi-glazed panel 10 includes: a first glass sheet 11 having a first face 31 placeable to face outdoors and a second face 32 opposite to the first face 31; a second glass sheet 12 having a third face 33 facing the second face 32 and a fourth face 34 opposite to the third face 33; and a plurality of columns 16 in contact with the second face 32 and the third face 33, wherein at least one of the first face 31, the second face 32, the third face 33, or the fourth face 34 has (i) a reflective area 22 provided with at least one reflective film 21 serving to reflect ultraviolet light and (ii) a transmissive area 23 serving to transmit ultraviolet light, and the plurality of columns 16 include at least one column 16 having an area 16S that coincides with the at least one reflective film 21 as viewed in a direction perpendicular to the first face 31.

## Description

### Technical Field

The present disclosure relates to a multi-glazed panel including a pair of glass sheets.

### Background Art

A multi-glazed panel as a windowpane of a building lets birds fly toward nature reflected in the windowpane or indoor plants or the like visible through the windowpane and unfortunately collide with the windowpane.

Patent Literature 1 discloses a multi-glazed panel including a glass sheet, an anti-reflective coating on an entire surface of the glass sheet, and a UV reflectance coating in a separated pattern over the surface of the glass sheet. Birds are known to have tetrachromatic vision, which covers the near-ultraviolet range. Birds, in other words, chromatically perceive light with wavelengths in the ultraviolet range (that is, the range of 300 nm to 400 nm), which is chromatically unperceivable by human beings. The multi-glazed panel disclosed in Patent Literature 1 includes a glass sheet provided with a UV reflectance coating in view of the color vision of birds to cause birds to more likely perceive the multi-glazed panel and thereby prevent collision by birds.

### Citation List

### Patent Literature

Patent Literature 1
Japanese Translation of PCT International Application, JP2016-520033A

### Summary

### Technical Problem

The multi-glazed panel disclosed in Patent Literature 1 includes an anti-reflective coating and a UV reflectance coating such that the glass sheet has UV reflectance areas in a particular patten to produce the effect of causing birds to more likely perceive the multi-glazed panel. This effect, however, depends on the pattern of the UV reflectance coating. The multi-glazed panel still has room for improvement in terms of the function of preventing collision by birds.

The above circumstances have led to a demand for a multi-glazed panel having an improved function of preventing collision by birds.

### Solution to Problem

A multi-glazed panel according to the present disclosure characteristically includes: a first glass sheet having a first face placeable to face outdoors and a second face opposite to the first face; a second glass sheet having a third face facing the second face and a fourth face opposite to the third face; and a plurality of columns in contact with the second face and the third face, wherein at least one of the first face, the second face, the third face, or the fourth face has (i) a reflective area provided with at least one reflective film serving to reflect ultraviolet light and (ii) a transmissive area serving to transmit ultraviolet light, and the plurality of columns include at least one column having an area that coincides with the at least one reflective film as viewed in a direction perpendicular to the first face.

The multi-glazed panel configured as above includes a first glass sheet placeable to face outdoors, a second glass sheet placeable to face indoors, and a plurality of columns between the first glass sheet and the second glass sheet. One of the glass sheets has a reflective area provided with at least one reflective film serving to reflect ultraviolet light and a transmissive area serving to transmit ultraviolet light. The reflective area and the transmissive area cause birds to more likely see both nature reflected in the windowpane and indoor plants or the like visible through the windowpane. Further, the plurality of columns cause birds to more likely recognize the multi-glazed panel as an artificial object. These arrangements can prevent birds from colliding with the multi-glazed panel. Ultraviolet light has wavelengths that are chromatically unperceivable by human beings but are chromatically perceivable by birds. The first glass sheet, for example, being provided with at least one reflective film that serve to reflect ultraviolet light causes birds to more likely perceive the multi-glazed panel, without impairing its appearance.

Further, with the above configuration, the plurality of columns include at least one column having an area that coincides with the at least one reflective film as viewed in the direction perpendicular to the first face. This allows the multi-glazed panel to include four types of light-reflecting portions, namely, a first reflective portion in which only a reflective area is present, a second reflective portion in which a reflective film and a column coincide with each other, a third reflective portion in which a transmissive area and a column coincide with each other, and a fourth reflective portion in which only a transmissive area is present. This causes birds to more likely recognize the multi-glazed panel as an artificial object, and thereby allows the multi-glazed panel to have an improved function of preventing collision by birds. The above four types of reflective portions serve to reflect light with different wavelengths. This difference is unrelated to the variation in the luminance of light reflected in the reflective area caused by the variation in the thickness of the at least one reflective film.

The multi-glazed panel may further be arranged such that the reflective area includes a plurality of reflective films apart from each other at a predetermined interval, and the transmissive area has a maximum width of not less than 3 cm and not more than 20 cm.

The transmissive area having a maximum width of not less than 3 cm and not more than 20 cm as above reliably causes birds to see both nature reflected in the windowpane and indoor plants or the like visible through the windowpane. This allows the multi-glazed panel to have a further improved function of preventing collision by birds.

The multi-glazed panel may further be arranged such that the plurality of columns are evenly spaced from each other, and mutually adjacent columns among the plurality of columns have respective centers apart from each other by a distance of not less than 3 cm and not more than 20 cm.

The above multi-glazed panel is arranged such that the plurality of columns are evenly spaced from each other and that mutually adjacent columns among the plurality of columns have respective centers apart from each other by a distance of not less than 3 cm and not more than 20 cm. This causes birds to more likely perceive the plurality of columns in the multi-glazed panel, and thereby allows the multi-glazed panel to have a further improved function of preventing collision by birds.

The multi-glazed panel may further be arranged such that the plurality of columns are evenly spaced from each other, and the reflective area includes a plurality of reflective films apart from each other at a predetermined interval, and mutually adjacent reflective films among the plurality of reflective films are apart from each other by a distance different from a distance by which respective centers of mutually adjacent columns among the plurality of columns are apart from each other.

The above multi-glazed panel is arranged such that the plurality of columns are evenly spaced from each other and that the plurality of reflective films are apart from each other by a distance different from the distance between the plurality of columns. This allows the four types of reflective portions to be in a complicated pattern, and thereby allows the multi-glazed panel to have a further improved function of preventing collision by birds.

The multi-glazed panel may further be arranged such that the at least one reflective film is in a stripe shape.

The at least one reflective film being in a stripe shape as above allows the reflective area to include portions next to each other. This in turn allows the multi-glazed panel to have a further improved function of preventing collision by birds.

The multi-glazed panel may further be arranged such that the at least one reflective film is in a dot shape.

The at least one reflective film being in a dot shape as above forms a minimally required reflective area on the multi-glazed panel, and reduces the cost of producing the multi-glazed panel.

The multi-glazed panel may further be arranged such that the at least one reflective film includes titanium oxide.

The at least one reflective film including titanium oxide as above provides a reflective area on the multi-glazed panel that serves to reflect more ultraviolet light.

The multi-glazed panel may further be arranged such that the at least one reflective film has a thickness of not less than 10 nm and not more than 50 nm.

The at least one reflective film having the above thickness allows the reflective area to have an ultraviolet reflectance higher than that of the transmissive area. This reduces the cost of producing the multi-glazed panel, and causes birds to more likely perceive the multi-glazed panel.

The multi-glazed panel may further be arranged such that the at least one reflective film has a thickness of not less than 60 nm and not more than 100 nm.

The at least one reflective film having the above thickness allows the reflective area to have a higher reflectance for both ultraviolet light and visible light than that of the transmissive area. This allows the multi-glazed panel to have a higher contrast, and thereby causes birds to more likely perceive the multi-glazed panel.

The multi-glazed panel may further be arranged such that the at least one reflective film has a thickness of not less than 140 nm and not more than 200 nm.

The at least one reflective film having the above thickness allows the reflective area to have an even higher reflectance for both ultraviolet light and visible light than that of the transmissive area. This allows the multi-glazed panel to have an even higher contrast, and thereby causes birds to even more likely perceive the multi-glazed panel.

The multi-glazed panel may further include: a sealing section extending along an entire edge of each of the first glass sheet and the second glass sheet and enclosing a gap between the first glass sheet and the second glass sheet under reduced pressure.

The above sealing section imparts heat insulation to the multi-glazed panel.

The multi-glazed panel may further be arranged such that the plurality of columns, which are in contact with the second face and the third face, include at least one column that coincides with the reflective area as viewed in the direction perpendicular to the first face over a contact area which accounts for not less than 20% of a total of respective contact areas of the plurality of columns.

The reflective area has a low ultraviolet transmittance and a high ultraviolet reflectance as compared to the transmissive area. Similarly, the reflective area is known to have a low near-infrared transmittance. The multi-glazed panel thus tends to have a low temperature in the reflective area as compared to the transmissive area. In view of that, the above multi-glazed panel is arranged such that the at least one column coincides with the reflective area, which tends to have a relatively low temperature as above, over a contact area which accounts for not less than 20% of the total of the respective contact areas of the plurality of columns. This means that the multi-glazed panel has a small amount of heat in that area of the glass sheets in which at least one column coincides with the reflective area, thereby reducing transfer of heat through the plurality of columns. The above arrangement thus allows the multi-glazed panel to have a low heat transmission coefficient (U-value) and maintain its heat insulation.

The multi-glazed panel may further be arranged such that the plurality of columns, which are in contact with the second face and the third face, include at least one column that coincides with the reflective area as viewed in the direction perpendicular to the first face over a contact area which accounts for not less than 50% of a total of respective contact areas of the plurality of columns.

The above multi-glazed panel is arranged such that the at least one column coincides with the reflective area over a contact area which accounts for not less than 50% of the total of the respective contact areas of the plurality of columns. This means that the multi-glazed panel has a smaller amount of heat in that area of the glass sheets in which at least one column coincides with the reflective area, thereby further reducing transfer of heat through the plurality of columns. The above arrangement thus allows the multi-glazed panel to have a lower heat transmission coefficient (U-value) and better maintain its heat insulation.

The multi-glazed panel may further include: a heat insulator film disposed on the third face and serving to reflect far-infrared light, wherein the first face has the reflective area and the transmissive area.

Disposing a heat insulator film on the third face of the second glass sheet as above allows the multi-glazed panel to prevent escape of indoor heat for increased heat insulation. Disposing a reflective area on the first face of the first glass sheet causes birds to more likely perceive the reflective film, and thereby allows the multi-glazed panel to have an improved function of preventing collision by birds. Further, disposing a reflective film on the first glass sheet of the multi-glazed panel and a heat insulator film on the second glass sheet thereof improves the yield of glass sheets, as compared to a case of disposing a reflective film and a heat insulator film on a single glass sheet.

The multi-glazed panel may further include: a heat insulator film disposed on the third face and serving to reflect far-infrared light, wherein the second face has the reflective area and the transmissive area.

Disposing a heat insulator film on the third face of the second glass sheet as above allows the multi-glazed panel to prevent escape of indoor heat for increased heat insulation. Disposing a reflective area on the second face of the first glass sheet prevents the reflective film from being exposed to outside air, and thereby allows the reflective area to have a high weather resistance. Further, disposing a reflective film on the first glass sheet of the multi-glazed panel and a heat insulator film on the second glass sheet thereof improves the yield of glass sheets, as compared to a case of disposing a reflective film and a heat insulator film on a single glass sheet.

The multi-glazed panel may further include: a heat barrier film disposed on the second face and serving to reflect near-infrared light, wherein the third face has the reflective area and the transmissive area.

Disposing a heat barrier film on the second face of the first glass sheet as above prevents the multi-glazed panel from easily transmitting heat from outdoors to indoors for improved heat barrier property of the multi-glazed panel. Disposing a reflective area on the third face of the second glass sheet prevents the reflective film from being exposed to outside air, and thereby allows the reflective area to have a high weather resistance. Further, disposing a heat barrier film on the first glass sheet of the multi-glazed panel and a reflective film on the second glass sheet thereof improves the yield of glass sheets, as compared to a case of disposing a reflective film and a heat barrier film on a single glass sheet.

The multi-glazed panel may further be arranged such that the multi-glazed panel is configured to prevent collision by a bird.

The reduced-pressure multi-glazed panel described above is effectively usable to prevent collision by birds and thereby protect birds, and maintains its appearance as well.

### Brief Description of Drawings

FIG. 1 is an exploded perspective view of a multi-glazed panel as Embodiment 1.
FIG. 2 is a vertical cross-sectional view of the multi-glazed panel.
FIG. 3 is a plan view of the multi-glazed panel.
FIG. 4 is a plan view of a multi-glazed panel as Variation 1 of Embodiment 1.
FIG. 5 is a plan view of a multi-glazed panel as Variation 2 of Embodiment 1.
FIG. 6 is a graph that shows the relationship between different wavelengths and the respective reflectances of reflective films with different thicknesses.
FIG. 7 is a graph that shows the relationship between different wavelengths and the respective reflectances of reflective films with different thicknesses.
FIG. 8 is a graph that shows the relationship between different wavelengths and the respective reflectances of reflective films with different thicknesses.
FIG. 9 is a graph that shows the relationship between different wavelengths and the respective reflectances of reflective films with different thicknesses.
FIG. 10 is a vertical cross-sectional view of a multi-glazed panel as Embodiment 2.
FIG. 11 is a vertical cross-sectional view of a multi-glazed panel as Embodiment 3.
FIG. 12 is a vertical cross-sectional view of a multi-glazed panel as Embodiment 4.
FIG. 13 is a vertical cross-sectional view of a multi-glazed panel as a variation of Embodiment 4.
FIG. 14 is a plan view of a multi-glazed panel as an alternative embodiment.
FIG. 15 is a plan view of a multi-glazed panel as an alternative embodiment.
FIG. 16 is a plan view of a multi-glazed panel as an alternative embodiment.

### Description of Embodiments

The description below deals with a multi-glazed panel as an embodiment of the present disclosure with reference to drawings. The present embodiment described below is a reduced-pressure multi-glazed panel as an example multi-glazed panel. The present disclosure is, however, not limited to the embodiment below, and may be altered variously as long as such an alteration falls within the scope of the present disclosure.

### [Embodiment 1]

The description below deals with a reduced-pressure multi-glazed panel as Embodiment 1 with reference to drawings.

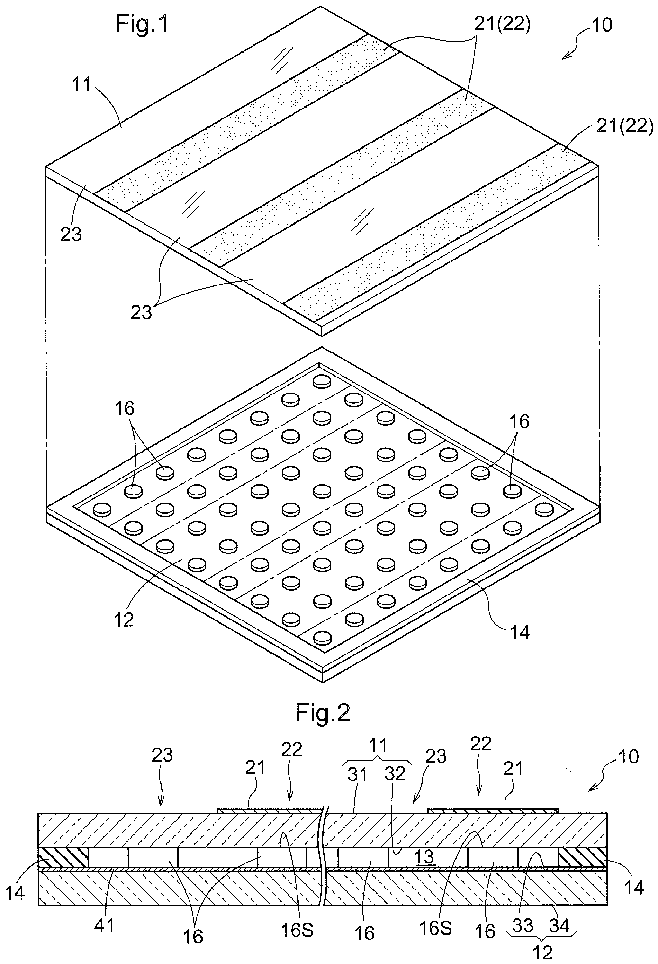

As illustrated in FIGs. 1 and 2, the reduced-pressure multi-glazed panel (hereinafter referred to as "glass panel") 10 includes a first glass sheet 11, a second glass sheet 12 facing the first glass sheet 11, a sealing section 14, and a plurality of columns 16. The sealing section 14 extends along the entire edge of each of the first glass sheet 11 and the second glass sheet 12. The columns 16 are between the first glass sheet 11 and the second glass sheet 12.

The first glass sheet 11 is float glass that has a first face 31 and a second face 32 opposite to the first face 31. The second glass sheet 12 is float glass that has a third face 33 facing the second face 32 of the first glass sheet 11 and a fourth face 34 opposite to the third face 33. The glass panel 10 as the present embodiment is designed such that the first face 31 of the first glass sheet 11 faces outdoors and that the fourth face 34 of the second glass sheet 12 faces indoors.

The glass panel 10 has a predetermined gap 13 between the first glass sheet 11 and the second glass sheet 12. The gap 13 is enclosed by the sealing section 14 under vacuum (which is an example of the "reduced pressure"). This imparts heat insulation to the glass panel 10. The gap 13 is formed by (i) disposing a plurality of columns 16 between the second face 32 of the first glass sheet 11 and the third face 33 of the second glass sheet 12 to keep the second face 32 and the third face 33 apart from each other by a predetermined distance and (ii) forming a sealing section 14 along the entire edge of each of the glass sheets 11 and 12. The sealing section 14 is made of, for example, a sealing material. A vacuum is created in the gap 13 for example by, after forming a sealing section 14 along the edge of each of the glass sheets 11 and 12, sucking air from the gap 13 through a suction port (not illustrated in the drawings) in the first glass sheet 11 and then closing the suction port with use of, for example, melted low-melting glass. The glass panel 10 may have a gap 13 enclosed under a pressure lower than atmospheric pressure.

As illustrated in FIGs. 1 and 2, the columns 16 are in contact with the second face 32 of the first glass sheet 11 and the third face 33 of the second glass sheet 12. The columns 16 are, for example, circular columns.

The columns 16 are made of, for example, a ceramic material such as alumina and zirconia. The columns 16 may contain a nanoparticle filler made of, for example, zirconia. Containing zirconia easily allows the columns 16 to have a low heat conductivity, a high heat resistance, and a high strength. Examples of the material of the columns 16 include ceramic nanoparticles (Al₂O₃, SiO₂, ZrO₂, SiC, Si₃N₄, and any combination thereof), a ceramic precursor such as SSQ and polysilazane, a sintered ceramic (such as Al₂O₃, SiO₂, ZrO₂, SiC, Si₃N₄, zircon, steatite, cordierite, and aluminum titanate), a glass (such as silica, soda lime, and borosilicate), a glass ceramic (crystallized glass), glass frit, glass beads or bubble glass, a metal (such as stainless steels SUS304, SUS430, and SUS410, iron, and nickel), a resin (such as a polyimide, polyamide, PEEK, and PTFE), and any combination thereof. The columns 16 are each in contact with each of the second face 32 of the first glass sheet 11 and the third face 33 of the second glass sheet 12 over a surface with a diameter of, for example, not less than 100 µm and not more than 1000 µm. Birds have great vision: It is not less than five times greater, or even not less than seven times greater depending on the species of birds, than that of human beings. The columns 16 may be invisible to human beings, but are sufficiently visible to birds. Further, the columns 16 being in contact with each of the second face 32 and the third face 33 over a surface with a diameter of not larger than 1000 µm allows the glass panel 10 to have a low heat transmission coefficient (U-value), thereby allowing the glass panel 10 to have improved heat insulation.

The first face 31 of the first glass sheet 11 has (i) a reflective area 22 provided with reflective films 21 serving to reflect ultraviolet light and (ii) a transmissive area 23 serving to transmit ultraviolet light.

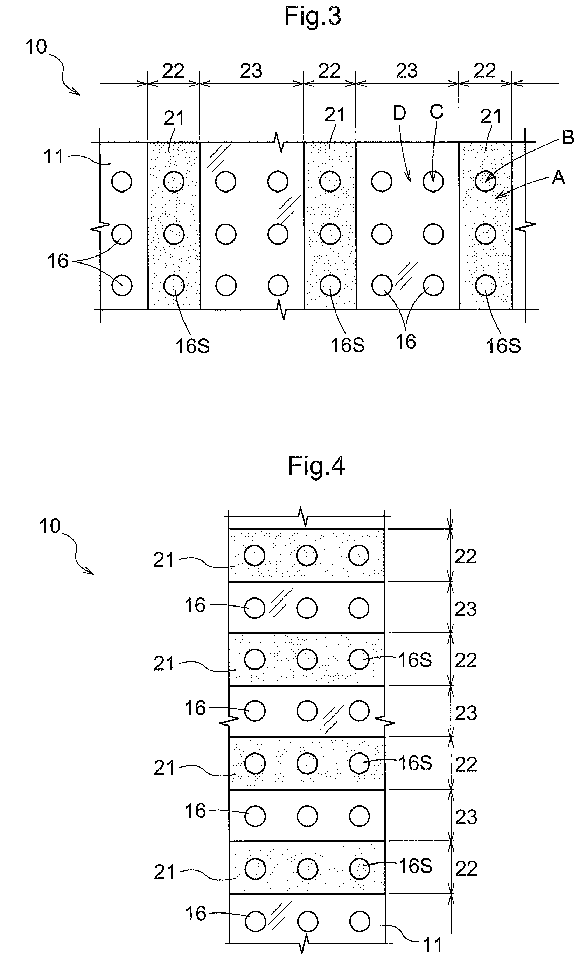

The reflective area 22 is provided with reflective films 21 each in the shape of a belt. As illustrated in FIGs. 1 to 3, the present embodiment is configured such that the reflective films 21 extend in the gravitational direction (that is, the up-down direction in FIG. 3) and are apart from one another at predetermined intervals in the horizontal direction (that is, the left-right direction in FIG. 3), which is orthogonal to the gravitational direction. The transmissive area 23 is that area of the first face 31 of the first glass sheet 11 which is not provided with the reflective films 21.

The reflective films 21 each include, for example, a plurality of layers on top of each other. The layers may each include tin oxide (SnO₂) or silicon oxide (SiO₂). The reflective films 21 may each include, for example, tin oxide as a first layer, silicon oxide as a second layer, tin oxide doped with fluorine (F:SnO₂) as a third layer, and silicon oxide as a fourth layer, arranged in this order from the first face 31. The first layer of tin oxide has a thickness of 5 nm to 100 nm (inclusive of the upper and lower limits; hereinafter the same applies), preferably 10 nm to 50 nm, more preferably 10 nm to 20 nm. The second layer of silicon oxide has a thickness of 5 nm to 100 nm, preferably 10 nm to 50 nm, more preferably 15 nm to 30 nm. The third layer of tin oxide dope with fluorine has a thickness of 5 nm to 200 nm, preferably 50 nm to 150 nm, more preferably 100 nm to 120 nm. The fourth layer of silicon oxide has a thickness of 5 nm to 200 nm, preferably 50 nm to 150 nm, more preferably 80 nm to 100 nm. The reflective films 21 each include at least one of the first to fourth layers.

The reflective films 21 may each include a layer of titanium dioxide (TiO₂). The layer of titanium dioxide has a thickness of 10 nm to 100 nm, preferably 10 nm to 50 nm. The reflective films 21 may each consist of a single layer of titanium oxide. The reflective films 21 can each be produced by a thin-film depositing technique such as magnetron sputtering, CVD, PCVD, or sol-gel method.

The reflective films 21 may each be produced by, for example, sequentially depositing SnO₂ (first layer), SiO₂ (second layer), F:SnO₂ (third layer), SiO₂ (fourth layer), and TiO₂ onto the first face 31 of the first glass sheet 11. The reflective films 21 each have a thickness of, for example, not less than 10 nm and not more than 200 nm.

It is known that while human beings have trichromatic vision (blue, green, and red), birds have tetrachromatic vision (ultraviolet, blue, green, and red). Birds thus perceive the environment with richer color vision than human beings.

The present embodiment is arranged such that the first glass sheet 11 of the glass panel 10 has a first face 31 with a reflective area 22 that reflects ultraviolet light and a transmissive area 23 that transmits ultraviolet light and that the glass panel 10 includes a plurality of columns 16 between the first glass sheet 11 and the second glass sheet 12. The reflective area 22 and the transmissive area 23 cause birds to more likely see both nature reflected in the reflective area 22 and indoor plants or the like visible through the glass sheets 11 and 12. Further, the columns 16 cause birds to more likely recognize the glass panel 10 as an artificial object. These arrangements can prevent birds from colliding with the glass panel 10. Ultraviolet light has wavelengths that are chromatically unperceivable by human beings but are chromatically perceivable by birds. The glass panel 10 including reflective films 21 that serve to reflect ultraviolet light causes birds to more likely perceive the glass panel 10.

As illustrated in FIGs. 1 to 3, the reflective films 21 are on the first face 31 in a striped pattern. The reflective films 21 are apart from one another at predetermined intervals in the horizontal direction (left-right direction) of the first glass sheet 11 to form a reflective area 22. The reflective area 22 has a width of not less than 1 cm, preferably not less than 5 cm, more preferably not less than 10 cm. The reflective films 21 for the reflective area 22 are apart from one another by a distance (that is, the distance between the mutually facing sides of mutually adjacent reflective films 21) of preferably not less than 3 cm and not more than 20 cm, more preferably not less than 5 cm and not more than 10 cm. This means that the transmissive area 23 has a maximum width of not less than 3 cm and not more than 20 cm, preferably not less than 5 cm and not more than 10 cm. The transmissive area 23 having a maximum width of not less than 3 cm and not more than 20 cm reliably cause birds to see both nature reflected in the reflective area 22 and indoor plants or the like visible through the glass sheets 11 and 12. Further, the transmissive area 23 having a maximum width of not less than 5 cm and not more than 10 cm means that the transmissive area 23 has a width not larger than the width of a minimum area through which birds tend to pass (for example, an area with a dimension of 5 cm in the gravitational direction and a dimension of 10 cm in the horizontal direction). This allows the glass panel 10 to have an improved function of preventing collision by birds.

The columns 16 include at least one column 16 having an area 16S that coincides with a reflective film 21 as viewed in the direction perpendicular to the first face 31. The present embodiment is arranged such that approximately one-third of the columns 16 are each in contact with each of the glass sheets 11 and 12 over a surface that coincides with a reflective film 21. This allows the glass panel 10 to include four types of light-reflecting portions as viewed in the direction perpendicular to the first face 31, namely, a first reflective portion in which only a reflective area 22 (reflective film 21) is present (indicated as "A" in FIG. 3), a second reflective portion in which a reflective film 21 and a column 16 coincide with each other (indicated as "B" in FIG. 3), a third reflective portion in which a transmissive area 23 and a column 16 coincide with each other (indicated as "C" in FIG. 3), and a fourth reflective portion in which only a transmissive area 23 is present (indicated as "D" in FIG. 3). This causes birds to more likely recognize the glass panel 10 as an artificial object, and thereby allows the glass panel 10 to have a further improved function of preventing collision by birds.

The four types of reflective portions are specifically arranged as follows: The first reflective portion (A) serves to reflect strong ultraviolet light with wavelengths of 370 nm and therearound. The second reflective portion (B) serves to reflect strong ultraviolet light as well as visible light by means of the column 16. The third reflective portion (C) serves to reflect weak ultraviolet light as well as visible light by means of the column 16. The fourth reflective portion (D) serves to reflect weak ultraviolet light. The above four types of reflective portions (A to D) serve to reflect light with different wavelengths. This difference is unrelated to the below-described variation in the luminance of light reflected in the reflective area 22 caused by the variation in the thickness of the reflective films 21.

As illustrated in FIGs. 1 to 3, as viewed in the direction perpendicular to the first face 31, the columns 16 are evenly spaced from one another, and the reflective films 21 for the reflective area 22 are apart from one another at predetermined intervals. Mutually adjacent reflective films 21 are apart from each other by a distance different from the distance between the respective centers of mutually adjacent columns 16. Specifically, mutually adjacent reflective films 21 are apart from each other by a distance larger than the distance between the respective centers of mutually adjacent columns 16.

The present embodiment is arranged such that the columns 16 are evenly spaced from one another and that the reflective films 21 are apart from one another by a distance different from the distance between the columns 16. This allows the four types of reflective portions to be in a complicated pattern, and thereby allows the glass panel 10 to have a further improved function of preventing collision by birds.

The glass panel 10 is configured such that the columns 16 are in contact with the second face 32 and the third face 33 and evenly spaced from one another. Mutually adjacent columns 16 have their respective centers apart from each other by a distance of, for example, not less than 3 cm and not more than 20 cm. Arranging the columns 16 as above in the glass panel 10 causes birds to more likely perceive the columns 16, and thereby allows the glass panel 10 to have a further improved function of preventing collision by birds.

The glass panel 10 includes a heat insulator film 41 disposed on the entire third face 33 of the second glass sheet 12 and serving to reflect far-infrared light. The heat insulator film 41 is, for example, a low-emissivity (low-e) film. A low-e film is made of a single metal layer or two or more layers on top of each other selected from a metal layer, a metal oxide layer, a metal nitride layer, and a metal oxynitride layer. The metal layer is, as a preferable example, a silver layer. The metal oxide layer is, as a preferable example, a tin oxide layer, titanium oxide layer, or a zinc oxide layer. The metal nitride layer is, as a preferable example, a silicon nitride layer. The metal oxynitride layer is, as a preferable example, a silicon oxynitride layer. A low-e film should preferably be formed under vacuum such as by physical vapor deposition (PVD), particularly preferably by sputtering, which allows formation of a large, uniform film.

Disposing a heat insulator film 41 on the third face 33 as for the present embodiment allows the second glass sheet 12 to prevent escape of indoor heat for increased heat insulation. Disposing the reflective areas 22 on the first face 31 of the first glass sheet 11 causes birds to more likely perceive the reflective areas 22 on the glass panel 10, and thereby more effectively prevents birds from colliding with the glass panel 10. Further, disposing reflective films 21 on the first glass sheet 11 and a heat insulator film 41 on the second glass sheet 12 improves the yield of glass sheets, as compared to a case of disposing reflective films 21 and a heat insulator film 41 on a single glass sheet.

### [Variation 1 of Embodiment 1]

As illustrated in FIG. 4, the glass panel 10 may include for a reflective area 22 a plurality of reflective films 21 apart from one another in the gravitational direction. The variation illustrated in FIG. 4 is, similarly to the above embodiment, arranged such that the reflective films 21 for the reflective area 22 are apart from one another by a distance of, for example, not less than 3 cm and not more than 20 cm. This means that the transmissive area 23 has a maximum width of not less than 3 cm and not more than 20 cm. The transmissive area 23 having a maximum width of not less than 3 cm and not more than 20 cm allows the glass panel 10 to have an improved function of preventing collision by birds.

### [Variation 2 of Embodiment 1]

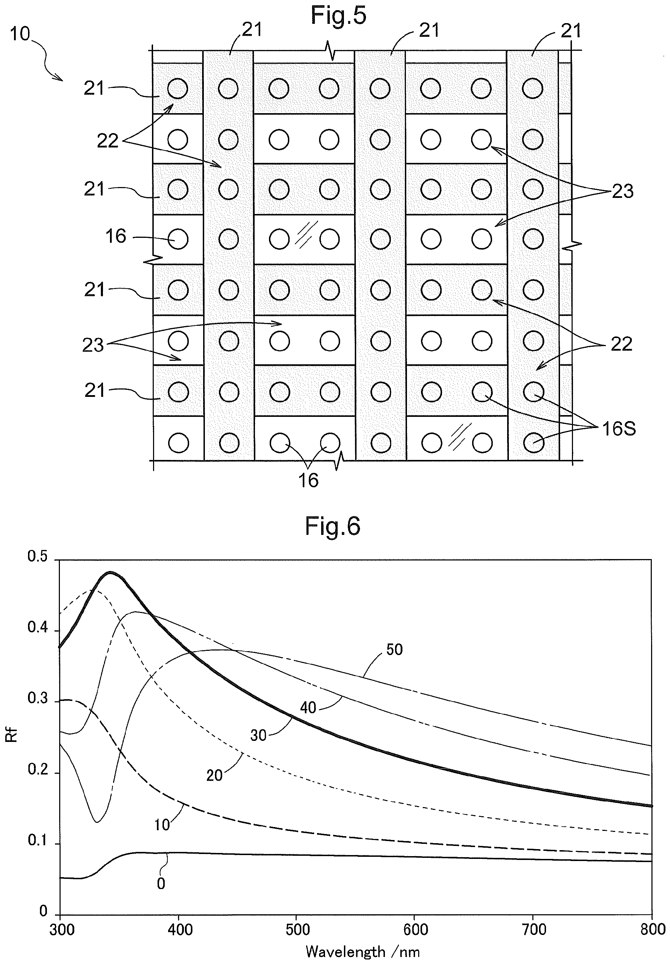

The glass panel 10 may include a plurality of reflective films 21 intersecting with one another. The variation illustrated in FIG. 5 includes a plurality of reflective films 21 extending in the horizontal direction (left-right direction) and another plurality of reflective films 21 extending in the gravitational direction (up-down direction) and intersecting with the above reflective films 21. The variation thus has a reflective area 22 in a grid pattern. The above arrangement allows the reflective area 22 to be in a grid pattern such that the transmissive area 23 has (i) a width smaller than the width of a minimum area through which birds tend to pass (for example, smaller than 10 cm in the horizontal direction) and (ii) a length smaller than the length of a minimum area through which birds tend to pass (for example, smaller than 5 cm in the gravitational direction). This allows the glass panel 10 to have a further improved function of preventing collision by birds.

The glass panel 10 as the present variation is arranged such that the plurality of columns 16, which are in contact with the second face 32 and the third face 33, include columns 16 that coincide with the reflective area 22 as viewed in the direction perpendicular to the first face 31 over respective contact areas which together account for not less than 50% of the total of the respective contact areas of all the columns 16.

The reflective area 22 has a low ultraviolet transmittance and a high ultraviolet reflectance as compared to the transmissive area 23. Similarly, the reflective area 22 is known to have a low near-infrared transmittance. The glass panel 10 thus tends to have a low temperature in the reflective area 22 as compared to the transmissive area 23. The present variation is arranged such that the columns 16 that coincide with the reflective area 22, which tends to have a relatively low temperature as above, over respective contact areas which together account for not less than 50% of the total of the respective contact areas of all the columns 16. This means that the glass panel 10 has a small amount of heat in those areas of the glass sheets 11 and 12 in which columns 16 coincide with the reflective area 22, thereby reducing transfer of heat through the columns 16. The above arrangement thus allows the glass panel 10 to have a low heat transmission coefficient (U-value) and maintain its heat insulation.

### [Variation 3 of Embodiment 1]

Variation 2 of Embodiment 1 described above is an example in which the columns 16 include columns 16 that coincide with the reflective area 22 as viewed in the direction perpendicular to the first face 31 over respective contact areas which together account for not less than 50% of the total of the respective contact areas of all the columns 16. The columns 16 that coincide with the reflective area 22 may alternatively have respective contact areas which together account for not less than 20% of the total of the respective contact areas of all the columns 16.

The glass panel 10 as Variation 3 also has a small amount of heat in those areas of the glass sheets 11 and 12 in which columns 16 coincide with the reflective area 22, thereby reducing transfer of heat through the columns 16. The above arrangement thus allows the glass panel 10 to have a low heat transmission coefficient (U-value) and maintain its heat insulation.

### [Reflectance of Reflective Films]

Reflective films 21 with thicknesses of 0 nm to 200 nm (in steps of 10 nm) were produced on a surface of a glass sheet with a thickness of 3.1 mm. The reflectance (Rf) of each reflective film 21 was measured with respect to wavelengths of 300 nm to 800 nm for observation of variation in the reflectance. The reflective films 21 were each a single layer of TiO₂. FIGs. 6 to 9 each present the result of the measurement of the reflectances (Rf). The graphs each show leader lines and associated numbers to indicate the respective thicknesses (nm) of different reflective films 21.

As illustrated in FIG. 6, the reflectance was approximately 0.1 over the entire wavelength range when a reflective film 21 was absent on the first face 31 of the first glass sheet 11 (that is, the reflective film 21 had a thickness of 0). The reflectance reached 0.3 or more within the wavelength range of 300 nm to 400 nm (that is, the ultraviolet range) when the reflective film 21 had a thickness of 10 nm to 200 nm.

The reflective films 21 may each have a thickness of not less than 10 nm and not more than 50 nm as illustrated in FIG. 6. The reflective films 21 each having a thickness of not less than 10 nm and not more than 50 nm are thin but allow the reflective area 22 to have a particularly high ultraviolet reflectance as compared to the transmissive area 23. This reduces the cost of producing the glass panel 10, and causes birds to more likely perceive the glass panel 10.

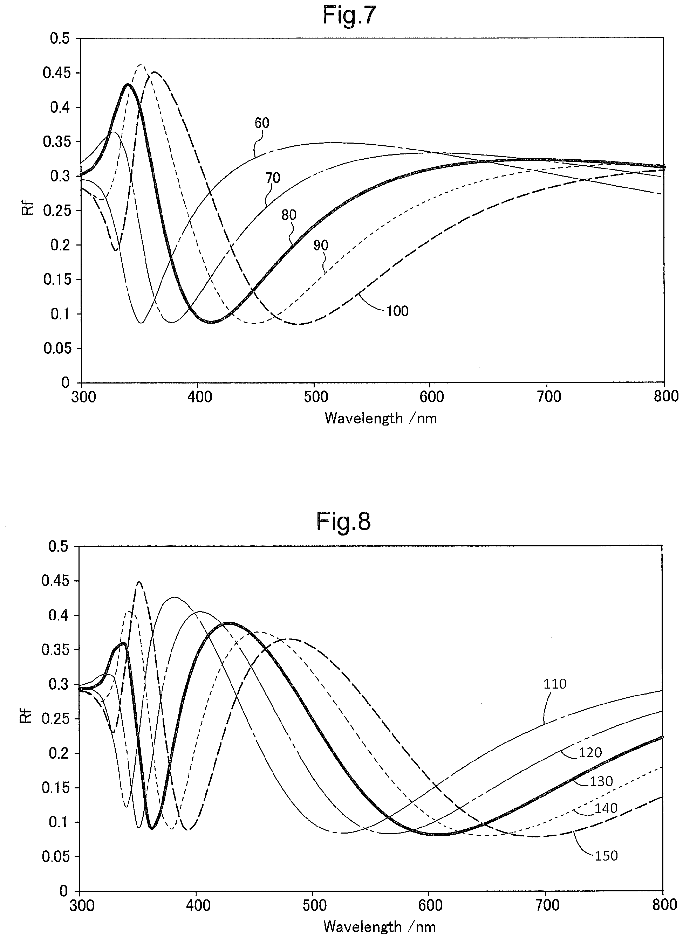

The reflective films 21 may each have a thickness of not less than 60 nm and not more than 100 nm as illustrated in FIG. 7. The reflective films 21 each having a thickness of not less than 60 nm and not more than 100 nm allow the reflective area 22 to have a high reflectance not only in the ultraviolet range (that is, the wavelength range of 300 nm to 400 nm), but also in the visible light range (that is, the wavelength range of 400 nm to 780 nm), which is outside the ultraviolet range. The above thickness range thus allows the reflective area 22 to have a high reflectance for both ultraviolet light and visible light as compared to the transmissive area 23. This causes light reflected in the reflective area 22 to have a high luminance. Light reflected in the reflective area 22 has a luminance that varies according to the variation in the thickness of the reflective films 21. This luminance variation is unrelated to the difference described above with reference to FIG. 3 in the wavelength range of light reflected in the four types of reflective portions (A to D).

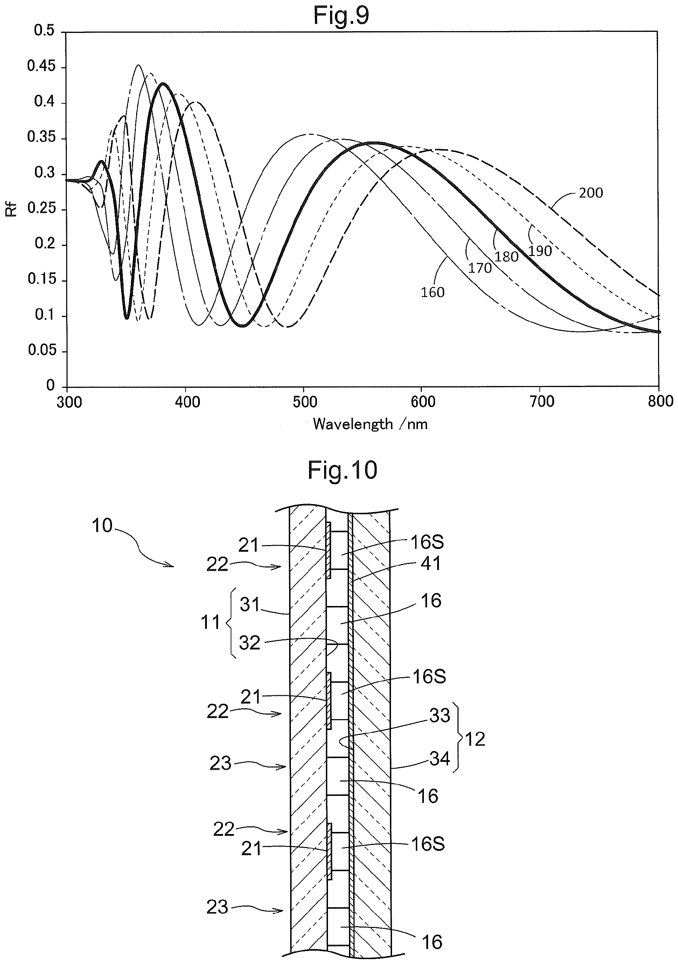

The reflective films 21 may each have a thickness of not less than 140 nm and not more than 200 nm as illustrated in FIGs. 8 and 9. The reflective films 21 each having a thickness of not less than 140 nm and not more than 200 nm allow the reflective area 22 to have a high reflectance not only in the ultraviolet range (that is, the wavelength range of 300 nm to 400 nm), but also in the visible light range (that is, the wavelength range of 400 nm to 780 nm), which is outside the ultraviolet range. In particular, the reflective films 21 each having a thickness of not less than 140 nm and not more than 200 nm allow the reflectance to have two distinct peaks in the ultraviolet range and the visible light range, respectively. This in turn allows light reflected in the reflective area 22 to have distinct luminance peaks. The above thickness range thus allows the reflective area 22 to have a high reflectance for both ultraviolet light and visible light as compared to the transmissive area 23. This causes light reflected in the reflective area 22 to have a high luminance, thereby causing birds to more likely perceive the glass panel 10.

### [Embodiment 2]

Embodiment 2 is, as illustrated in FIG. 10, a glass panel 10 including a plurality of reflective films 21 for a reflective area 22 on the second face 32 of the first glass sheet 11 and a low-e film as the heat insulator film 41 disposed on the entire third face 33 of the second glass sheet 12.

Disposing a heat insulator film 41 on the third face 33 of the glass panel 10 as for the present embodiment allows the glass panel 10 to prevent escape of indoor heat for increased heat insulation. The glass panel 10 having a reflective area 22 on the second face 32 prevents the reflective films 21 from being exposed to outside air, and thereby allows the reflective area 22 to have a high weather resistance. Further, disposing reflective films 21 on the first glass sheet 11 and a heat insulator film 41 on the second glass sheet 12 improves the yield of glass sheets, as compared to a case of disposing reflective films 21 and a heat insulator film 41 on a single glass sheet.

### [Embodiment 3]

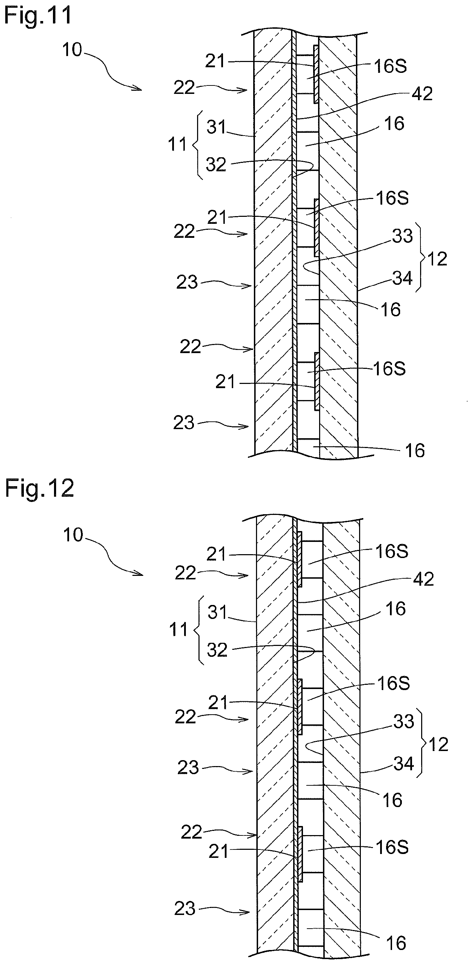

Embodiment 3, as illustrated in FIG. 11, includes a low-e film disposed on the entire second face 32 of the first glass sheet 11 as a heat barrier film 42 serving to reflect near-infrared light and a plurality of reflective films 21 for a reflective area 22 on the third face 33 of the second glass sheet 12.

Disposing a heat barrier film 42 on the second face 32 of the glass panel 10 as for the present embodiment prevents the glass panel 10 from easily transmitting heat from outdoors to indoors for improved heat barrier property of the glass panel 10. The glass panel 10 having a reflective area 22 on the third face 33 prevents the reflective films 21 from being exposed to outside air, and thereby allows the reflective area 22 to have a high weather resistance. Further, disposing a heat barrier film 42 on the first glass sheet 11 and reflective films 21 on the second glass sheet 12 improves the yield of glass sheets, as compared to a case of disposing reflective films 21 and a heat barrier film 42 on a single glass sheet.

### [Embodiment 4]

Embodiment 4, as illustrated in Fig. 12, includes a low-e film disposed on the entire second face 32 of the first glass sheet 11 as a heat barrier film 42 and reflective films 21 on the front surface of the heat barrier film 42.

Disposing a heat barrier film 42 on the second face 32 as for the present embodiment prevents easy transmission of heat from outdoors to indoors for improved heat barrier property. Disposing a reflective area 22 on the second face 32 means that the reflective area 22 are toward the outdoor side, thereby causing birds to more likely perceive the glass panel 10.

### [Variation of Embodiment 4]

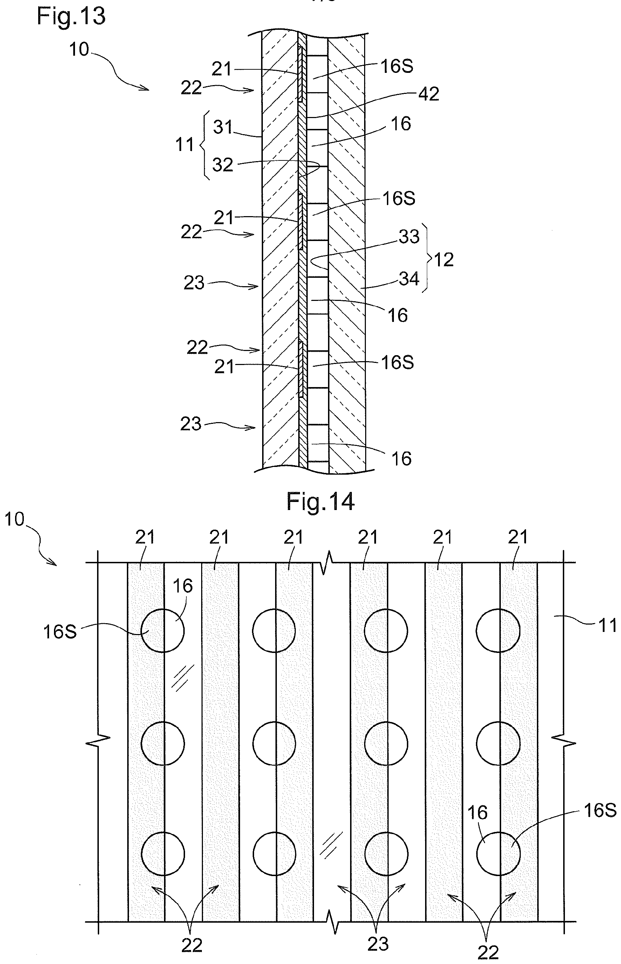

The present variation, as illustrated in Fig. 13, includes reflective films 21 on the second face 32 of the first glass sheet 11 and a low-e film as a heat barrier film 42 disposed over the entire second face 32 of the first glass sheet 11 in such a manner as to cover the respective front surfaces of the reflective films 21. This allows the reflective area 22 to be separated from the columns 16 by the heat barrier film 42, and thereby prevents the reflective area 22 from coming into contact with and being damaged by the columns 16. This arrangement may alternatively be on the third face 33.

### [Alternative Embodiments]

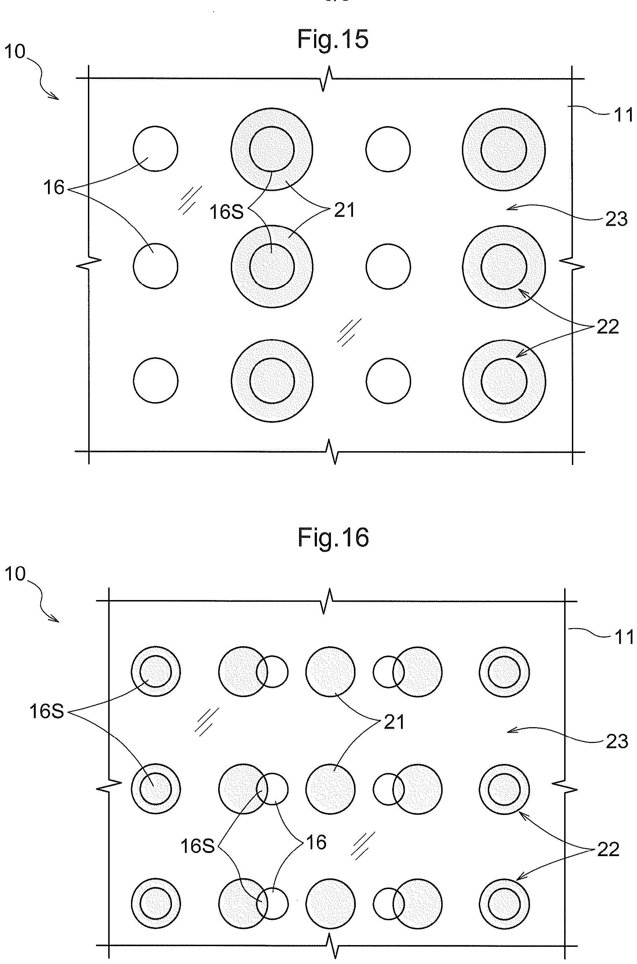

(1) The embodiments described above are each an example including glass sheets 11 and 12 either of which is provided with a plurality of belt-shaped reflective films 21 extending in either the gravitational direction (up-down direction) or the horizontal direction (left-right direction). The plurality of belt-shaped reflective films 21 may alternatively extend obliquely to cross the gravitational direction (up-down direction) and the horizontal direction (left-right direction).
(2) As illustrated in FIG. 14, the glass panel 10 may include columns 16 each of which overlaps with a reflective film 21 over an area 16S. Further, as illustrated in FIG. 14, mutually adjacent reflective films 21 among the plurality of reflective films 21 may be apart from each other by a distance smaller than the distance by which mutually adjacent columns 16 among the plurality of columns 16 are apart from each other.
(3) As illustrated in FIG. 15, the reflective films 21 may each be in the shape of a dot on a surface of either of the glass sheets 11 and 12. The dot-shaped reflective films 21 may also be apart from one another by a distance equal to or different from the distance by which the columns 16 are apart from one another. The dot-shaped reflective films 21 form a minimally required reflective area 22, and reduce the cost of producing the glass panel 10. FIG. 15 illustrates an example in which the respective centers of the reflective films 21 are apart from one another by a distance larger than the distance by which the respective centers of the columns 16 are apart from one another. FIG. 16 illustrates an example in which the respective centers of the dot-shaped reflective films 21 are apart from one another by a distance smaller than the distance by which the respective centers of the columns 16 are apart from one another. The example illustrated in FIG. 16 is further arranged such that the columns 16 include both (i) columns 16 each of which coincides entirely with a reflective film 21 and (ii) columns 16 each of which overlaps with a reflective film 21. The reflective films 21 may further alternatively include both dot-shaped reflective films 21 and stripe-shaped reflective films 21.
(4) The embodiments described above are each an example glass panel 10 having a reflective area 22 on one of the first to third faces 31 to 33 among the first to fourth faces 31 to 34. The reflective area 22 may alternatively be on the fourth face 34.
(5) The embodiments described above are each an example including glass sheets 11 and 12 either of which is provided with a plurality of reflective films 21 disposed at regular intervals for a reflective area 22. The reflective films 21 may alternatively be disposed at irregular intervals.
(6) The embodiments described above are each an example including columns 16 each in the shape of a cylinder. The shape of the columns 16 is, however, not limited to a cylinder, and may alternatively be, for example, a prism or an elliptic cylinder.
(7) The embodiments described above may each further include an anti-reflective film for the transmissive area 23 on the glass sheet 11, 12.

### Industrial Applicability

The present disclosure is widely applicable to multi-glazed panels.

### Reference Signs List

- 10: Glass panel
- 11: First glass sheet
- 12: Second glass sheet
- 13: Gap
- 14: Sealing section
- 16: Column
- 16S: Area
- 21: Reflective film
- 22: Reflective area
- 23: Transmissive area
- 31: First face
- 32: Second face
- 33: Third face
- 34: Fourth face
- 41: Heat insulator film
- 42: Hear barrier film

## Claims

1. A multi-glazed panel, comprising:
a first glass sheet having a first face placeable to face outdoors and a second face opposite to the first face;
a second glass sheet having a third face facing the second face and a fourth face opposite to the third face; and
a plurality of columns in contact with the second face and the third face,
wherein at least one of the first face, the second face, the third face, or the fourth face has (i) a reflective area provided with at least one reflective film serving to reflect ultraviolet light and (ii) a transmissive area serving to transmit ultraviolet light, and
the plurality of columns include at least one column having an area that coincides with the at least one reflective film as viewed in a direction perpendicular to the first face.

2. The multi-glazed panel according to claim 1, wherein
the reflective area includes a plurality of reflective films apart from each other at a predetermined interval, and
the transmissive area has a maximum width of not less than 3 cm and not more than 20 cm.

3. The multi-glazed panel according to claim 1 or 2, wherein
the plurality of columns are evenly spaced from each other, and
mutually adjacent columns among the plurality of columns have respective centers apart from each other by a distance of not less than 3 cm and not more than 20 cm.

4. The multi-glazed panel according to any one of claims 1 to 3, wherein
the plurality of columns are evenly spaced from each other,
the reflective area includes a plurality of reflective films apart from each other at a predetermined interval, and
mutually adjacent reflective films among the plurality of reflective films are apart from each other by a distance different from a distance by which respective centers of mutually adjacent columns among the plurality of columns are apart from each other.

5. The multi-glazed panel according to any one of claims 1 to 4, wherein
the at least one reflective film is in a stripe shape.

6. The multi-glazed panel according to any one of claims 1 to 5, wherein
the at least one reflective film is in a dot shape.

7. The multi-glazed panel according to any one of claims 1 to 6, wherein
the at least one reflective film includes titanium oxide.

8. The multi-glazed panel according to claim 7, wherein
the at least one reflective film has a thickness of not less than 10 nm and not more than 50 nm.

9. The multi-glazed panel according to claim 7, wherein
the at least one reflective film has a thickness of not less than 60 nm and not more than 100 nm.

10. The multi-glazed panel according to claim 7, wherein
the at least one reflective film has a thickness of not less than 140 nm and not more than 200 nm.

11. The multi-glazed panel according to any one of claims 1 to 10, further comprising:
a sealing section extending along an entire edge of each of the first glass sheet and the second glass sheet and enclosing a gap between the first glass sheet and the second glass sheet under reduced pressure.

12. The multi-glazed panel according to any one of claims 1 to 11, wherein
the plurality of columns, which are in contact with the second face and the third face, include at least one column that coincides with the at least one reflective area as viewed in the direction perpendicular to the first face over a contact area which accounts for not less than 20% of a total of respective contact areas of the plurality of columns.

13. The multi-glazed panel according to any one of claims 1 to 11, wherein
the plurality of columns, which are in contact with the second face and the third face, include at least one column that coincides with the at least one reflective area as viewed in the direction perpendicular to the first face over a contact area which accounts for not less than 50% of a total of respective contact areas of the plurality of columns.

14. The multi-glazed panel according to any one of claims 1 to 13, further comprising:
a heat insulator film disposed on the third face and serving to reflect far-infrared light,
wherein the first face has the reflective area and the transmissive area.

15. The multi-glazed panel according to claims 1 or 13, further comprising:
a heat insulator film disposed on the third face and serving to reflect far-infrared light,
wherein the second face has the reflective area and the transmissive area.

16. The multi-glazed panel according to claims 1 or 13, further comprising:
a heat barrier film disposed on the second face and serving to reflect near-infrared light,
wherein the third face has the reflective area and the transmissive area.

17. The multi-glazed panel according to any one of claims 1 to 16, wherein
the multi-glazed panel is configured to prevent collision by a bird.
